Europäisches Patentamt

European Patent Office

Office européen des brevets

(19)

(11) Veröffentlichungsnummer: **0 191 139**
**B1**

(12) # EUROPÄISCHE PATENTSCHRIFT

(45) Veröffentlichungstag der Patentschrift :
09.08.89

(21) Anmeldenummer : 85112960.1

(22) Anmeldetag : 12.10.85

(51) Int. Cl.⁴ : **H 04 N   9/78**, H 04 N 11/18

(54) Secam-Kammfilter.

(30) Priorität : 12.02.85 DE 3504647

(43) Veröffentlichungstag der Anmeldung :
20.08.86 Patentblatt 86/34

(45) Bekanntmachung des Hinweises auf die Patenterteilung : 09.08.89 Patentblatt 89/32

(84) Benannte Vertragsstaaten :
BE CH DE FR LI

(56) Entgegenhaltungen :
DE–B– 2 911 190
DE–B– 2 911 927
FERNSEH & KINO TECHNIK, Band 37, Nr. 5, 1983,
Seiten 203-215; E. DEGUFFROY et al.: "Kammfilter
zur Decodierung von Videosignalen"

(73) Patentinhaber : GRUNDIG E.M.V. Elektro-Mechanische Versuchsanstalt Max Grundig holländ. Stiftung &
Co. KG.
Kurgartenstrasse 37
D-8510 Fürth/Bay. (DE)

(72) Erfinder : Grothaus, Ulrich, Dipl.-Ing. (FH)
Laubenweg 6
D-8501 Puschendorf (DE)
Erfinder : Lagerpusch, Klaus, Dipl.-Ing. (FH)
Rorltzerstrasse 35
D-8500 Nürnberg 90 (DE)

## Beschreibung

Die vorliegende Erfindung betrifft ein Kammfilter zur Verringerung des Einflusses von Nebensprechkomponenten, die bei der Wiedergabe von in zwischenraumlosen Schrägspuren magnetisch aufgezeichneten SECAM-Farbvideosignalen entstehen, mit einem Verzögerungsglied, in dem das von Nebensprechkomponenten überlagerte Chrominanzsignal um zwei Zeilendauern verzögert wird, und mit einem Schalter zum Abschalten des Kammfilters, wobei das frequenzmodulierte Chrominanzsignal vor der Aufzeichnung von den durch die SECAM-Norm bedingten, in einem bestimmten Rhythmus erfolgenden Phasenumschaltungen befreit wird und eine neue, in jeder zweiten Aufzeichnungsspur wirksame rhythmische Phasenumschaltung zur Vermeidung von Nebensprechen zwischen den in benachbarten Spuren aufgezeichneten, frequenzmodulierten Chrominanzsignalen eingeführt wird.

Bei Videoaufzeichnungsgeräten ist es üblich, das zusammengesetzte Farbvideosignal in das Luminanzund das trägerfrequente Chrominanzsignal aufzuspalten, mit dem Luminanzsignal die Frequenz einer Trägerschwingung zu modulieren und das Chrominanzsignal in einen Frequenzbereich umzusetzen, der unterhalb des vom frequenzmodulierten Luminanzsignal eingenommenen Frequenzbandes liegt. Weiterhin ist es üblich, ein Halbbild je Schrägspur aufzuzeichnen und zur verbesserten Ausnutzung des Magnetbandes die Schrägspuren ohne Zwischenraum oder sogar einander überlappend nebeneinander zu schreiben.

Um bei der Wiedergabe einer solchen zwischenraumlosen Aufzeichnung das Nebensprechen von Spur zu Spur zu vermindern, werden benachbarte Spuren mit Azimutversatz aufgezeichnet, d. h. mit von Spur zu Spur winkelversetzter Lage des Videokopfspaltes, wobei allerdings der Azimuteffekt nur für höhere Frequenzen, d. h. nur für das frequenzmodulierte Luminanzsignal, nicht aber für das in einen niedrigen Frequenzbereich umgesetzte Chrominanzsignal hinreichend wirksam ist.

Zur Verminderung des Chrominanzsignal-Übersprechens sind folglich weitere Maßnahmen nötig.

So ist es aus der auf die Anmelderin zurückgehenden DE-C-29 11 927 bekannt, vor der Aufzeichnung unter Einhaltung bestimmter Bestimmungen, beispielsweise eines geeigneten Zeilenversatzes von Spur zu Spur, das Chrominanzsignal in einem ganz bestimmten Rhythmus in der Phase zu verschieben. Bei der Wiedergabe wird mit Hilfe eines Kammfilters dafür gesorgt, daß sich die aus einer Spur abgetasteten Nutzsignale verstärken, die störenden Nebensprechkomponenten sich aber gegenseitig auslöschen. Ein derartiges SECAM-Kammfilter besteht üblicherweise aus einem 2-Zeilen-Verzögerer und einem Addierer, der das unverzögerte und das um zwei Zeilen verzögerte Signal addiert. Am Ausgang des Addierers erhält man ein kammgefiltertes, vom Nebensprechen befreites Signal. Beim bekannten Kammfilter ist ferner ein Schalter vorgesehen, der das Kammfilter automatisch unwirksam schaltet, wenn scharfe vertikale Farbkanten auftreten, welche im wiedergebenden Bild zu Farbstörungen führen würden, die sich unter Umständen unangenehmer bemerkbar machen würden als das Nebensprechen von benachbarten Spuren.

Es hat sich gezeigt, daß das Kammfilter nicht nur bei scharfen vertikalen Farbkanten, sondern ganz allgemein immer dann Störungen im wiedergegebenen Bild hervorruft, die vom Betrachter unangenehmer empfunden würden als das Nebensprechen von benachbarten Spuren, wenn die aufzeichnungsseitige Aufbereitung des Chrominanzsignals nicht hinreichend durchgeführt wurde, wenn also kein kammfiltergerechtes Signal aufgezeichnet wird.

Ein nicht kammfiltergerechtes Signal liegt beispielsweise dann vor, wenn vor der Aufzeichnung die durch die SECAM-Norm bedingte Umschaltung der Phase des Chrominanz-FM-Trägers in jeder dritten Zeile und von Halbbild zu Halbbild nicht rückgängig gemacht wird. Eine nicht kammfiltergerechte Aufzeichnung liegt ferner dann vor, wenn es vor der Aufzeichnung versäumt wird, eine definierte Phasenbeziehung zwischen den FM-Trägern benachbarter Spuren zu erzeugen, die für eine Kammfilterung einerseits unerläßlich ist, aber andererseits wegen der durch die SECAM-Norm bedingten Eigenschaften der Signale Schwierigkeiten bereitet. Bei der Wiedergabe solcher nicht kammfiltergerechter Aufzeichnungen treten Phasenstörungen auf. In derartigen Fällen würden vom Kammfilter Störungen im wiedergebenden Bild verursacht, die unangenehmer empfunden würden, als die durch das Nebensprechen von Spur zu Spur hervorgerufenen Störungen.

Demzufolge besteht die Aufgabe der Erfindung darin, ein neuartiges, für den Wiedergabekanal eines Magnetbandgerätes geeignetes Kammfilter zu schaffen, das beim Vorliegen einer kammfiltergerechten Aufzeichnung die gewünschte Übersprechkompensation durchführt, und bei einer nicht kammfiltergerechten Aufzeichnung automatisch abgeschaltet wird.

Diese Aufgabe wird durch ein Kammfilter mit den im Patentanspruch 1 angegebenen Merkmalen gelöst. Weitere vorteilhafte Eigenschaften ergeben sich aus den Unteransprüchen.

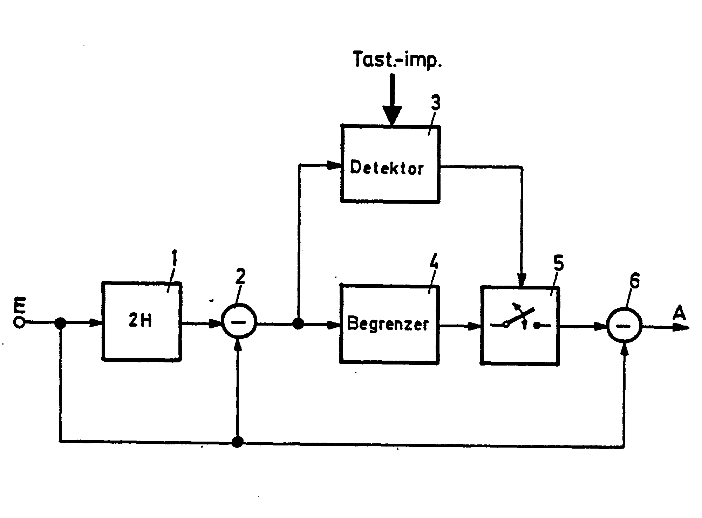

Die Vorteile der Erfindung liegen insbesondere darin, daß das Kammfilter das unerwünschte Nebensprechen immer dann beseitigt, wenn eine kammfiltergerechte Aufzeichnung vorliegt, und automatisch immer dann unwirksam geschaltet wird, wenn eine nicht kammfiltergerechte Aufzeichnung vorliegt, so daß die bei einer nicht kammfiltergerechten Aufzeichnung durch das Kammfilter verursachten Störungen vermieden werden, die vom Betrachter unangenehmer empfunden würden als die durch das Nebensprechen von benachbarten Spuren verursachten Störungen. Weitere vorteilhafte Eigenschaften des Kammfilters nach der vorliegenden Erfindung werden an einem Ausführungsbeispiel gezeigt, das im folgenden mit Hilfe der Figur näher erläutert wird.

Die Figur zeigt den grundsätzlichen Aufbau eines Kammfilters nach der vorliegenden Erfindung. Am Eingang E des Kammfilters liegt das mit Nebensprechen behaftete, in einen niedrigen Frequenzbereich umgesetzte Chrominanzsignal an. Dieses wird einem 2-Zeilen-Verzögerer 1, einer ersten Subtrahierstufe 2 und einer zweiten Subtrahierstufe 6 zugeführt. Der ersten Subtrahierstufe 2 wird ferner das Ausgangssignal des 2-Zeilen-Verzögerers 1 zugeführt. Durch die Subtraktion im Subtrahierer 2 löschen sich die Chrominanzsignalteile (Nutzsignale) aus, während sich die Nebensprechkomponenten addierten. Das Ausgangssignal des Subtrahierers 2 wird einem Begrenzer 4 und einem Detektor 3 zugeleitet. Im Begrenzer 4 werden Störungen, die durch die oben beschriebenen Effekte entstehen können, in ihrer Amplitude begrenzt. Dazu werden die Abschneidepegel des Begrenzers 4 betragsmäßig so festgelegt, daß sie das Nebensprechen (dessen Amplitude in etwa bekannt ist) nicht begrenzen, wohl aber eventuelle, im Ausgangssignal des Subtrahierers erhaltene Störungen, deren Amplituden die Amplitude des Nebensprechens bei nicht kammfiltergerechter Aufzeichnung bei weitem übersteigen können. Das Ausgangssignal des Begrenzers 4 wird über einen Schalter 5, der im Falle einer kammfiltergerechten Aufzeichnung geschlossen ist, dem anderen Eingang des Subtrahierers 6 zugeführt. Am Ausgang A des Subtrahierers 6 liegt das kammgefilterte, vom Nebensprechen befreite Signal an.

In der Praxis hat sich gezeigt, daß bei nichtkammfiltergerechten Aufzeichnungen durch das Kammfilter trotz des Begrenzers 4 Störungen hervorgerufen werden können, die vom Betrachter des Bildes unangenehmer empfunden würden als die durch das Nebensprechen von Spur zu Spur verursachten Störungen. Deshalb ist der Detektor 3 vorgesehen, der erkennt, ob das Ausgangssignal des Subtrahierers 2 lediglich aus reinem Nebensprechen besteht, oder ob dem Nebensprechen durch Phasenfehler verursachte Störungen überlagert sind, deren Amplitude die (in etwa bekannte) Amplitude des Nebensprechens um mehr als einen vorgegebenen Wert überschreitet. Sind dem Nebensprechen durch Phasenfehler verursachte Störungen überlagert, dann gibt der Detektor 3 ein Ausgangssignal ab, das den Schalter 5 öffnet, also das Kammfilter « abschaltet », so daß am Ausgang A der Schaltung das Nutzsignal einschließlich Nebensprechen anliegt. Sind dem Nebensprechen keine durch Phasenfehler verursachte Störungen überlagert, dann wird im Subtrahierer 6 die gewünschte Kammfilterung erreicht, d. h. das am Eingang E der Schaltung anliegende Nutzsignal wird von den ihm überlagerten Nebensprechkomponenten befreit, wobei im Zweig des Begrenzers 4

— falls nötig — Schaltmittel vorgesehen sein können, die sicherstellen, daß die Amplitude des Nebensprechens am Ausgang des Schalters 5 mit der Amplitude des dem Nutzsignal überlagerten, am anderen Eingang des Subtrahierers 6 anliegenden Nebensprechens betragsmäßig übereinstimmt.

Ferner hat es sich als besonders vorteilhaft erwiesen, den Detektor 3 nur während der hinteren Schwarzschulter des Videosignals aufzutasten, so daß nur während der hinteren Schwarzschulter überprüft wird, ob reine Nebensprechkomponenten vorliegen, oder ob dem Nebensprechen durch Phasenfehler verursachte Störkomponenten überlagert sind. Damit wird gleichzeitig ausgeschlossen, daß beispielsweise die bei bestimmten Bildinhalten auftretenden Phaseneffekte, die eventuell aufgrund der stark voneinander abweichenden Zeileninhalte verursacht werden, fälschlicherweise als nicht kammfiltergerechte Aufzeichnung identifiziert werden können. Die Detektion wird durch die genannte horizontalfrequente Tastung des Detektors 3 unabhängig von den Signalinhalten der Zeilen, d. h. weist eine hohe Erkennsicherheit auf.

Ein derartiges Kammfilter wird vorzugsweise im Farb-Wiedergabekanal eines zur Aufzeichnung und Wiedergabe von Farbvideosignalen nach der SECAM-Norm geeigneten Magnetbandgerätes verwendet. Besonders vorteilhaft ist die Kammfilterung, bevor das wiedergegebene Farbsignal in seinen ursprünglichen Frequenzbereich rückumgesetzt wird, da vor der Frequenzrückumsetzung die notwendigen Phasenbeziehungen am besten gewährleistet sind, und die bei der Wiedergabe von Magnetbandaufzeichnungen durch die unvermeidlichen Zeitfehler bedingten Phasenfehler am geringsten sind.

**Patentansprüche**

1. Kammfilter zur Verringerung des Einflusses von Nebensprechkomponenten, die bei der Wiedergabe von in zwischenraumlosen Schrägspuren magnetisch aufgezeichneten SECAM-Farbvideosignalen entstehen, mit einem Verzögerungsglied, in dem das von Nebensprechkomponenten überlagerte Chrominanzsignal um zwei Zeilendauern verzögert wird, und mit einem Schalter zum Abschalten des Kammfilters, wobei das frequenzmodulierte Chrominanzsignal vor der Aufzeichnung von den durch die SECAM-Norm bedingten, in einem bestimmten Rhythmus erfolgenden Phasenumschaltungen befreit wird und eine neue, in jeder zweiten Aufzeichnungsspur wirksame rhythmische Phasenumschaltung zur Vermeidung von Nebensprechen zwischen den in benachbarten Spuren aufgezeichneten, frequenzmodulierten Chrominanzsignalen eingeführt wird, dadurch gekennzeichnet, daß das um zwei Zeilendauern verzögerte Signal vom Eingangssignal des Verzögerungsgliedes in einem Subtrahierer (2) subtrahiert wird, daß ein Detektor (3) das Ausgangssignal des Subtrahierers (2) daraufhin überprüft, ob in diesem neben Nebensprech-komponenten auch von Phasenfehlern verursach-te Störkomponenten enthalten sind, daß der Detektor (3) den Schalter (5), dessen Eingang mit dem Ausgang des Subtrahierers (2), verbunden ist, in Abhängigkeit vom Überprüfungsergebnis durchlässig steuert oder sperrt, und daß das Ausgangssignal des Schalters (5) vom Eingangssignal des Verzögerungsgliedes in einem zweiten Subtrahierer (6) subtrahiert wird.

2. Kammfilter nach Anspruch 1, dadurch gekennzeichnet, daß der Detektor (3) nur während der hinteren Schwarzschulter im Austastbereich des Video-Signals aufgetastet wird.

3. Kammfilter nach Anspruch 1 oder 2, dadurch gekennzeichnet, daß der Ausgang des Subtrahierers (2) mit dem Eingang des Schalters (5) über einen Begrenzer (4) verbunden ist, dessen Begrenzungswirkung erst bei Signalamplituden einsetzt, die um einen vorgebbaren Wert größer sind als die am Ausgang des Subtrahierers (2) zu erwartenden Amplituden der Nebensprechkomponenten.

4. Kammfilter nach einem oder mehreren der vorhergehenden Ansprüche, dadurch gekennzeichnet, daß es im Wiedergabekanal eines Magnetbandgerätes auf das in einen niedrigen Frequenzbereich umgesetzte frequenzmodulierte Chrominanzsignal angewendet wird.

## Claims

1. Comb filter for reducing the influence of crosstalk components which arise in the playback of SECAM colour video signals magnetically recorded in unspaced helical tracks, having a delay element, in which the chrominance signal on which crosstalk components are superimposed is delayed by two line periods, and having a switch for the disconnecting of the comb filter, the frequency-modulated chrominance signal being freed before the recording of phase reversals due to the SECAM standard and occurring in a certain rhythm, and a new rhythmic phase reversal, which is effective in every second recording track, being introduced for the avoidance of crosstalk between the frequency-modulated chrominance signals recorded in neighbouring tracks, characterized in that the signal delayed by two line periods is subtracted from the input signal of the delay element in a subtracter (2), in that a detector (3) checks the output signal of the subtracter (2) as to whether there are contained in the latter interference components caused by phase errors in addition to crosstalk components, in that the detector (3) controls transmissively or blocks the switch (5), the input of which is connected to the output of the subtracter (2), depending on the result of the check, and in that the output signal of the switch (5) is subtracted from the input signal of the delay element in a second subtracter (6).

2. Comb filter according to Claim 1, characterized in that the detector (3) is only gated during the back porch in the blanking range of the video signal.

3. Comb filter according to Claim 1 or 2, characterized in that the output of the subtracter (2) is connected to the input of the switch (5) via a limiter (4), the limiting effect of which only comes about at signal amplitudes which are greater by a predeterminable value than the amplitudes of the crosstalk components to be expected at the output of the subtracter (2).

4. Comb filter according to one or more of the preceding claims, characterized in that it is used in the playback channel of a magnetic tape recorder on the frequency-modulated chrominance signal converted into a low frequency range.

## Revendications

1. Filtre en peigne destiné à réduire l'influence de composantes de diaphonie, qui apparaissent lors de la lecture de signaux vidéo couleur SECAM, enregistrés magnétiquement sur des pistes obliques jointives, et comportant un circuit de retardement, dans lequel le signal de chrominance, auquel sont superposées des composantes de diaphonie, est retardé de deux durées, d'une ligne, et un interrupteur servant à débrancher le filtre en peigne, et dans lequel le signal de chrominance modulé en fréquence est libéré, avant l'enregistrement, des commutations de phase, qui sont imposées par la norme SECAM et sont exécutées à un rythme déterminé, et une nouvelle commutation rythmique de phase, active sur chaque seconde piste d'enregistrement, est introduite de manière à éviter une diaphonie entre les signaux de chrominance, modulés en fréquence et enregistrés dans des pistes voisines, caractérisé par le fait que le signal, qui est retardé de deux durées d'une ligne, est soustrait du signal d'entrée du circuit de retardement dans un soustracteur (2), qu'un détecteur (3) contrôle le signal de sortie du soustracteur (2) pour voir si ce signal contient en plus de composantes de diaphonie, également des composantes parasites provoquées par des défauts de phase, que le détecteur (3) ferme ou ouvre l'interrupteur (5), dont l'entrée est reliée à la sortie du soustracteur (2), en fonction du résultat du contrôle, et que le signal de sortie de l'interrupteur (5) est soustrait du signal d'entrée du circuit de retardement, dans un second soustracteur (6).

2. Filtre en peigne selon la revendication 1, caractérisé en ce que le détecteur (3) est activé uniquement pendant le palier arrière du noir dans la plage de suppression du signal vidéo.

3. Filtre en peigne selon la revendication 1 ou 2, caractérisé en ce que la sortie du soustracteur (2) est reliée à l'entrée de l'interrupteur (5) par l'intermédiaire d'un limiteur (4), dont l'action de limitation ne s'applique que pour des amplitudes du signal, qui sont supérieures, d'une valeur pouvant être prédéterminée, aux amplitudes, auxquelles on peut s'attendre à la sortie du soustracteur (2), des composantes de diaphonie.

4. Filtre en peigne selon une ou plusieurs des revendications précédentes, caractérisé en ce qu'il est utilisé dans le canal de lecture d'un appareil à bande magnétique pour traiter le signal de chrominance modulé en fréquence et amené, par conversion, dans une gamme de basses fréquences.

Tast.-imp.